# EUROPÄISCHE PATENTSCHRIFT

(11) **EP 2 864 059 B1**
(45) Veröffentlichungstag und Bekanntmachung des Hinweises auf die Patenterteilung: **21.09.2016**
(21) Anmeldenummer: 13739151.2
(22) Anmeldetag: 19.06.2013
(51) Int. Cl.: B06B 3/00, B06B 1/10, B23B 29/12

(54) **ULTRASCHALLGESTÜTZTES VERFAHREN, ZUR DURCHFÜHRUNG DES VERFAHRENS GEEIGNETES ULTRASCHALL-SCHWINGSYSTEM SOWIE SONOTRODE**
ULTRASOUND-ASSISTED METHOD, ULTRASONIC OSCILLATION SYSTEM SUITABLE FOR CARRYING OUT THE METHOD, AND SONOTRODE
PROCÉDÉ ASSISTÉ PAR ULTRASONS, SYSTÈME VIBRANT À ULTRASONS APPROPRIÉ POUR LA MISE EN UVRE DU PROCÉDÉ, AINSI QUE SONOTRODE

(30) Priorität: 20.06.2012 DE 102012105349
(43) Veröffentlichungstag der Anmeldung: 29.04.2015
(73) Patentinhaber: Fraunhofer-Gesellschaft zur Förderung der angewandten Forschung e.V., 80686 München (DE)
(72) Erfinder: HANNIG, Sophia, 52062 Aachen (DE)
(74) Vertreter: Naeven, Ralf
(86) Internationale Anmeldenummer: PCT/EP2013/062816
(87) Internationale Veröffentlichungsnummer: WO 2013/190019

(56) Entgegenhaltungen:
- DE-A1-102005 044 074
- DE-A1-102007 016 353
- US-A- 3 702 948

## Beschreibung

Die Erfindung betrifft ein ultraschallgestütztes Verfahren, ein zur Durchführung des Verfahrens geeignetes Ultraschallsystem gemäß dem Oberbegriff des Anspruchs 4 sowie eine Sonotrode gemäß dem Oberbegriff des Anspruchs 6.

Ultraschallgestützte Verfahren, bei denen Ultraschallschwingungen in eine Sonotrode eingeleitet werden, die diese Schallschwingungen an eine Wirkstelle weitergeben, sind in vielen Bereichen der Technik bekannt. So kann insbesondere der Ultraschall bei der Materialbearbeitung eingesetzt werden, zum Beispiel zur Unterstützung spanabhebender Prozesse. Es ist bekannt (DE 11 2004 002 942 T5), eine ultrapräzise Bearbeitung insbesondere von gehärtetem Stahl mittels eines Diamantwerkzeuges ultraschallunterstützt durchzuführen. Die Ultraschallunterstützung wirkt einem starken Verschleiß des Diamanten entgegen, welcher in der Affinität des Diamantkohlenstoffs zum Eisen im Werkstück und der dadurch bei Druck und Wärme hervorgerufenen Diffusionsvorgänge begründet ist. Mit einem stark verschlissenen Werkzeug lassen sich keine ultrapräzisen Oberflächen mehr herstellen. Wenn mittels des Ultraschalls der konventionellen Drehkinematik eine Schwingung des Werkzeuges im Ultraschallfrequenzen von zum Beispiel 40 bis 80 kHz überlagert wird, wird die Kontaktzeit zwischen Werkzeug und Werkstück und damit der Diamantverschleiß verringert und die Werkzeugstandzeit erhöht.

Bei dem bekannten System ist am Ende der Sonotrode das spanabhebende Werkzeug mit einer Schnittrichtung parallel zur Längsausrichtung der Sonotrode angeordnet. Die Ultraschallwellen werden gemäß dem zitierten Stand der Technik in einer longitudinalen Resonanzmode eingekoppelt.

Drehen, Schleifen oder Bohren sind beispielhafte spanende Fertigungsverfahren, die ultraschallunterstützt durchgeführt werden können. Der Ultraschall dient hierbei vorrangig der Prozesskraftreduktion durch die Schwingungsüberlagerung. Auch Trennverfahren, wie zum Beispiel Schneiden und Sägen, sind in Technik und Medizin mit Ultraschall unterstützbar, wie auch Verfahren zum Fügen von zum Beispiel Metallen oder Kunststoffen, insbesondere wenn in filigranen oder schwer erreichbaren Werkstückbereichen gefügt werden muss.

Ein weiterer großer Anwendungsbereich ist die Medizintechnik, zum Beispiel chirurgische Ultraschallinstrumente.

Das aus der vorgenannten DE 11 2004 002 942 T5 bekannte Longitudinal-Ultraschallsystem ist aber auf Grund der Schwingrichtung und der Bauform nur für die Bearbeitung einfacher, zylindrischer Werkstücke geeignet. Komplexere Stahlformen mit stark konkaven Oberflächen oder Freiform-Oberflächen sind nicht oder nur schwierig mit Ultraschallunterstützung über Longitudinalsysteme bearbeitbar, da mit dem Werkzeug oftmals nicht sämtliche zu bearbeitenden Flächenbereiche erreicht werden können.

Aus der EP 0 594 541 B1 ist ein Ultraschall-Bearbeitungsgerät mit einer ringförmigen Sonotrode bekannt, die eine kurze Baulänge in Schwingrichtung des Werkzeuges ermöglicht, wodurch schwer zugängliche Werkstücke einfacher bearbeitbar sein können. Die von einem Schwingungserreger erzeugten Longitudinalschwingungen werden von der Sonotrode aufgenommen, die entlang des Rings Schwingungsknoten und Schwingungsbäuche ausbildet. An einem der Schwingungsbäuche können ein Werkzeug und eine Werkzeughalterung angebracht werden, die dann ebenfalls mit einer longitudinalen Ultraschallwelle schwingen. Mittels der ringförmigen Sonotrode kann erreicht werden, dass die Werkzeughalterung in einem 90°-Winkel zur Schwingungsrichtung des Schwingungserzeugers schwingt. Aber auch hierdurch können stark konkave Oberflächen oder Freiformoberflächen nicht oder nur mit hohem Aufwand bearbeitet werden.

Werden anstelle longitudinaler Ultraschallwellen transversale Ultraschallwellen eingesetzt, ist es möglich, für ein am Sonotrodenendstück angeordnetes Werkzeug eine Schnittrichtung senkrecht zur Längsausrichtung der Sonotrode oder der Werkzeughalterung zu erreichen. Hierdurch kann die Bearbeitung stark konkaver Oberflächen oder von Freiform-Oberflächen erleichtert werden. Transversale Ultraschallwellen in der Sonotrode führen allerdings zu einer bogenförmigen Schwingungsbewegung des Werkzeuges, welche nachteilig sein kann, da nach Ausführen des Schnittes das Werkzeug bei der anschließenden Rückwärtsbewegung erneut in die zu bearbeitende Oberfläche einschlagen kann.

Zum ultraschallunterstützten Drehen mit monokristallinem Diamantwerkzeug ist ein Ultraschallschwingsystem bekannt (Development of 3 DOF Ultrasonic Vibration Tool for Elliptical Vibration Cutting of Sculptured Surfaces; E. Shamoto et al.; CIRP Annals-Manufacturing Technology, Vol. 54, Issue 1, 2005, S. 321 bis 324), bei dem mittels Piezo-Elementen der Sonotrode zwei in ihren Schwingungsebenen senkrecht aufeinander stehende transversale Ultraschallschwingungen aufgegeben werden, die zu einer elliptischen Bewegung des Sonotroden-Endstückes führen. In einer im vorgenannten Stand der Technik offenbarten Weiterentwicklung kann zusätzlich noch eine longitudinale Welle aufgegeben werden, so dass die elliptische Schwingung im dreidimensionalen Raum stattfindet. Die elliptische Bahn des Sonotroden-Endstückes verringert die Kontaktzeit zwischen Diamantwerkzeug und Werkstückoberfläche zusätzlich, um den Werkzeugverschleiß so weiter einzuschränken. Außerdem wird das Werkzeug beim Zurückschwingen aufgrund seiner elliptischen Bewegung an der zuvor bearbeiteten Werkstückstelle vorbeigeführt, wodurch ungewünschte Kontakte vermieden werden können: Das System ist allerdings für die praktische Anwendung sehr kostenintensiv und in Bezug auf die Ansteuerung und den Aufbau der piezoelektrischen Anregung sehr komplex.

Aus der DE 10 2007 016 353 A1 ist ein Ultraschallsystem bekannt, bei dem die Ultraschallwellen einer Sonotrode mittels einer Schwingungs-Koppeleinheit auf ein ein Werkzeug haltendes Endstück übertragen werden. Die Schwingungs-Koppeleinheit umfasst dabei zwei nebeneinander angeordnete Schwingungsbalken, die jeweils an ihrem einen Ende in einem gemeinsamen Eingangsteil und mit dem von der Sonotrode abgewandten Ende in einem gemeinsamen Ausgangsteil eingespannt sind. Die Parameter der beiden Schwingungsbalken sind dabei derart aufeinander abgestimmt, dass die gleichphasige Erregung über Sonotrode und Eingangsteil zu einer gleichphasigen Bewegung der im Ausgangsteil festgelegten Enden führen.

Aus der US 3,702,948 A ist eine als Handgerät ausgebildete Ultraschallmotor-Konstruktion zur Bearbeitung von Materialien, bevorzugt zum Schweißen oder Schneiden, bekannt, bei der zwei Sonotrodenarme zum einen über eine Verbindungsstelle miteinander verbunden sind und zum anderen ein Energieumwandler zwischen den Sonotrodenarmen angeordnet ist und auf beide Sonotrodenarme wirkt. Somit sind stets zwei Einkoppelstellen für den Ultraschall gegeben.

Es ist nun Aufgabe der vorliegenden Erfindung, ein ultraschallgestütztes Verfahren der eingangs genannten Art, ein zur Durchführung des Verfahrens geeignetes Ultraschallsystem der eingangs genannten Art sowie eine Sonotrode zur Verfügung zu stellen, welche die Möglichkeiten zur Einkopplung von Ultraschallschwingungen zu einer Wirkstelle erhöhen und insbesondere die Möglichkeiten zur Bearbeitung von schwer zugänglichen Flächen verbessern können.

Bei einem ultraschallgestützten Verfahren der eingangs genannten Art wird die Aufgabe durch die Merkmale des Anspruchs 1 gelöst.

Bevorzugte Ausführungsbeispiele des erfindungsgemäßen Verfahrens ergeben sich aus den Ansprüchen 2 und 3.

Mit der Erfindung wird eine neue Möglichkeit der Überlagerung von mindestens zwei transversalen Ultraschallwellen in einer Sonotrode offenbart. Anders als im vorgenannten Stand der Technik nach Shamoto et al. kann mit einer Überlagerung von Ultraschallwellen mit parallelen Schwingungsebenen eine Schwingung des Sonotroden-Endstückes erreicht werden, welche keine elliptische Bahn sondern eine Bewegung in einer einzigen Schwingungsebene erzeugt.

Als Schwingungsebene wird die durch die Ausbreitungsrichtung der Ultraschallwelle und ihre Schwingungsrichtung aufgespannte Ebene bezeichnet.

Insbesondere kann es vorteilhaft sein, für das erfindungsgemäße Verfahren die Resonanzmoden der sich überlagernden Ultraschallwellen derart zu wählen, dass die Schwingungsbewegung des Sonotrodenendstückes zumindest in einem Teilbereich der Schwingungsbewegung von der Bogenform abweicht, die durch eine einzige transversale Resonanzmode, das heißt eine einzige Biegeschwingung, erzeugt würde. Vielmehr kann die Schwingungsbewegung des Sonotrodenendstückes einer in der Schwingungsebene gegebenen Senkrechte zur Auskragungsrichtung der Sonotrode zumindest angenähert werden. Ideal ist eine rein lineare senkrechte Auf- und Abbewegung des Sonotrodenendstückes. Eine möglichst lineare Bewegung des Sonotrodenendstückes und damit eines daran fixierten Werkzeuges verbessert die Bearbeitungswirkung des Systems. Insbesondere kann so ein ungewünschter Kontakt zwischen Werkzeug und Werkstück bei der Rückschwingbewegung des Werkzeugs vermieden werden.

Es hat sich in der Praxis erwiesen, dass durch die Überlagerung von Ultraschallwellen mit zueinander parallelen Schwingungsebenen eine Änderung der Form der Schwingungsbewegung des Sonotrodenendstückes und damit des daran fixierten Werkzeuges von der Bogenform in Richtung auf eine lineare Bewegung hin möglich ist.

Die Schwingung der im Sonotrodenendstück durch die Überlagerung erzeugten Misch-Resonanzmode unterscheidet sich von der einer einzelnen transversalen sinusförmigen Ultraschallwelle, so dass hierdurch auch die Bewegungsbahn des Sonotrodenendstückes beeinflusst wird. Es ist daher möglich, zwei oder mehr transversale stehende Wellen zu einer Misch-Resonanzmode derart zu kombinieren, dass die Bewegung einer am Sonotrodenendstück angeordneten Werkzeugspitze weniger bogenförmig ist und sich einer geraden Form zumindest annähert. Die hierfür geeigneten Kombinationen von Ultraschallwellen in Abhängigkeit von der Sonotrodengeometrie lassen sich durch Simulationsrechnungen ermitteln.

Erfindungsgemäß weist die Sonotrode mindestens zwei jeweils selbstständig in einer eigenen Resonanzmode schwingbare Sonotrodenarme auf. In einer Verbindungsstelle, in der zwei Sonotrodenarme ineinander übergehen, überlagern sich deren Ultraschallwellen, wobei die überlagerten Ultraschallwellen in das Sonotrodenendstück gelangen.

Das Sonotrodenendstück befindet sich bevorzugt an einem auskragenden Ende der Sonotrode.

Bevorzugt gibt es zwischen jeweils zwei Sonotrodenarmen genau eine Verbindungsstelle. Weiter bevorzugt weist mindestens einer der Sonotrodenarme ein frei schwingendes Ende auf.

Die Verbindungsstelle befindet sich am Sonotrodenendstück oder in seiner Nähe oder ist mit dem Sonotrodenendstück identisch. Bei einer Sonotrode mit mehr als zwei Sonotrodenarmen kann es auch mehrere Verbindungsstellen geben.

Jeder Sonotrodenarm könnte für sich gesondert durch eine eigene Ultraschallquelle zu Schwingungen angeregt werden. Bevorzugt wird aber die Ultraschallschwingung allein in einen der Sonotrodenarme eingekoppelt. Über die jeweilige Verbindungsstelle zwischen den Sonotrodenarmen wird der zweite oder jeder weitere Sonotrodenarm zu eigenen Resonanzschwingungen angeregt. Über die Verbindungsstelle kommt es zu einer Überlagerung der Resonanzmoden in einer Misch-Resonanzmode, welche letztendlich die Schwingung des Sonotrodenendstückes bestimmt. Die eingesetzte Ultraschallfrequenz kann zum Beispiel einen Wert im Bereich von 40 kHz bis 80 kHz, bevorzugt 50 kHz bis 70 kHz, weiter bevorzugt 55 kHz bis 65 kHz aufweisen.

Es hat sich gezeigt, dass bei geeigneter Geometrie der Sonotrode die gewünschte Überlagerung von unterschiedlichen Resonanzmoden bei zwei verschiedenen Frequenzen erreicht werden kann, die sich zum Beispiel um den Faktor 1.5 unterscheiden. Somit kann ein und dieselbe Sonotrode zu verschiedenen Einsatzzwecken oder bei unterschiedlichen Bearbeitungsparametern verwendet werden, z.B. bei der ersten Frequenz zur Bearbeitung eines ersten Materials, z.B. Glas, und bei der zweiten Ultraschallfrequenz zur Bearbeitung eines zweiten Materials, z.B. Stahl.

Mit der Erfindung wird in einer Sonotrode Ultraschall mindestens zweier Resonanzmoden phasenverschoben einander überlagert, ohne dass hierfür zwei verschiedene Ultraschallquellen oder zwei verschiedene Einkoppelstellen für den Ultraschall benötigt werden. An einer einzigen Stelle eingekoppelter Ultraschall wird mittels der Sonotrodenarme über die Verbindungsstelle(n) in mehrere Ultraschallwellen unterschiedlicher Resonanzmoden aufgeteilt, die dann wiederum in der (den) Verbindungsstelle(n) zu einer Misch-Resonanzmode überlagern, welche im Sonotrodenendstück die Schwingungsbewegung eines Werkzeuges zumindest mitbestimmt.

Bei nur einer Einkoppelstelle ist die Frequenz des Ultraschalls vorgegeben, während weitere Eigenschaften der jeweiligen Ultraschallwellen in den Sonotrodenarmen, insbesondere die Wellenlänge, durch das Material der Sonotrodenarme und deren geometrische Ausgestaltungen bestimmt werden. Die Sonotrodenarme können daher in ihrer Länge, Breite und/oder Dicke und auch im Material geeignet gestaltet werden. Es ist auch denkbar, unterschiedliche Sonotrodenarme derselben Sonotrode aus unterschiedlichem Material zu fertigen. Die Sonotrode kann aus einem Stück gefertigt werden. Alternativ können die Sonotrodenarme in der (den) Verbindungsstelle(n) aneinander fixiert werden, z.B. durch einen Fügeprozess oder durch mechanische Hilfsmittel.

Die Sonotrodenarme sind außerhalb der Verbindungsstelle bevorzugt parallel zueinander angeordnet. Diese Anordnung kann in Schwingungsrichtung gesehen untereinander und/oder nebeneinander sein.

Das erfindungsgemäße Verfahren lässt sich besonders einfach und effektiv mit einer Sonotrode ausführen, die genau zwei Sonotrodenarme mit genau einer Verbindungsstelle aufweist. Die Verbindungsstelle ist am Sonotrodenendstück oder in dessen Nähe angeordnet oder ist identisch mit dem Sonotrodenendstück. Dabei kann es vorteilhaft sein, wenn die in den beiden Sonotrodenarmen gebildeten Ultraschallwellen an der Verbindungsstelle mit gleicher Frequenz im Wesentlichen im Gegentakt, d.h. im Wesentlichen mit einem Phasenunterschied von π, schwingen.

Das erfindungsgemäße Verfahren erlaubt unterschiedliche Gestaltungen der Sonotrode und bietet somit eine hohe Flexibilität für unterschiedlichste Anwendungen der erfindungsgemäßen Sonotrode bzw. des erfindungsgemäßen Ultraschall-Schwingsystems. Diese Anwendungen betreffen nicht nur die Bearbeitung von Stahloberflächen unter Einsatz eines Diamantwerkzeuges, z.B. in der Optikindustrie. Das System erlaubt zudem die direkte spanende Bearbeitung von Glasbauteilen. Auch bei Werkstücken aus Glas würde ohne Ultraschall der Werkzeugverschleiß durch das sprödharte Material zu hoch sein, um z.B. optische Qualitäten herzustellen. Die auskragende Sonotrode mit der nach der Erfindung möglichen transversalen Bearbeitungsrichtung ermöglicht wie bei anderen Werkstoffen auch beim Glas die unmittelbare spanende Bearbeitung komplexer Freiformoberflächen oder stark konkaver Flächen.

Das erfindungsgemäße Verfahren, die erfindungsgemäße Sonotrode und das erfindungsgemäße Ultraschall-Schwingsystem können auch für die in der Beschreibungseinleitung genannten weiteren Technologien bei der Bearbeitung verschiedenster Werkstoffen, z.B. beim Drehen, Schleifen oder Bohren, bei Trennverfahren, Fügeverfahren, oder bei chirurgischen Ultraschallinstrumenten eingesetzt werden. Die für die jeweilige Anwendung geeignete Form der Sonotrode und des eingesetzten Ultraschalls lässt sich durch Simulationsrechnungen ermitteln.

Bei einem zur Durchführung des Verfahrens geeigneten Ultraschallsystem der eingangs genannten Art wird wird die Aufgabe durch die kennzeichnenden Merkmale des Anspruchs 4 gelöst. Vorteilhafte Ausführungsformen ergeben sich aus dem Anspruch 5.

Bei einer Sonotrode der eingangs genannten Art wird die Aufgabe durch die kennzeichnenden Merkmale des Anspruchs 6 gelöst. Vorteilhafte Ausbildungsformen ergeben sich aus den Ansprüchen 7 bis 10.

Das erfindungsgemäße Verfahren, das erfindungsgemäße Ultraschallsystem sowie die erfindungsgemäße Sonotrode werden im Folgenden anhand von Figuren in beispielhaften Ausführungsformen erläutert.

Es zeigt
- Fig. 1:: ein Ultraschall-Schwingsystem in einer ersten Ansicht,
- Fig. 2:: das Ultraschallschwingsystem gemäß Fig. 1 in einer zweiten Ansicht zusammen mit einem Werkstück,
- Fig. 3:: eine Sonotrode,
- Fig. 4a:: die Sonotrode gemäß Fig. 3 mit Werkzeug in einem ersten Schwingungszustand,
- Fig. 4b:: die Sonotrode gemäß Fig. 4a in einem zweiten Schwingungszustand,
- Figuren 5a-c:: verschiedene Ansichten einer Sonotrode mit Maßangaben.

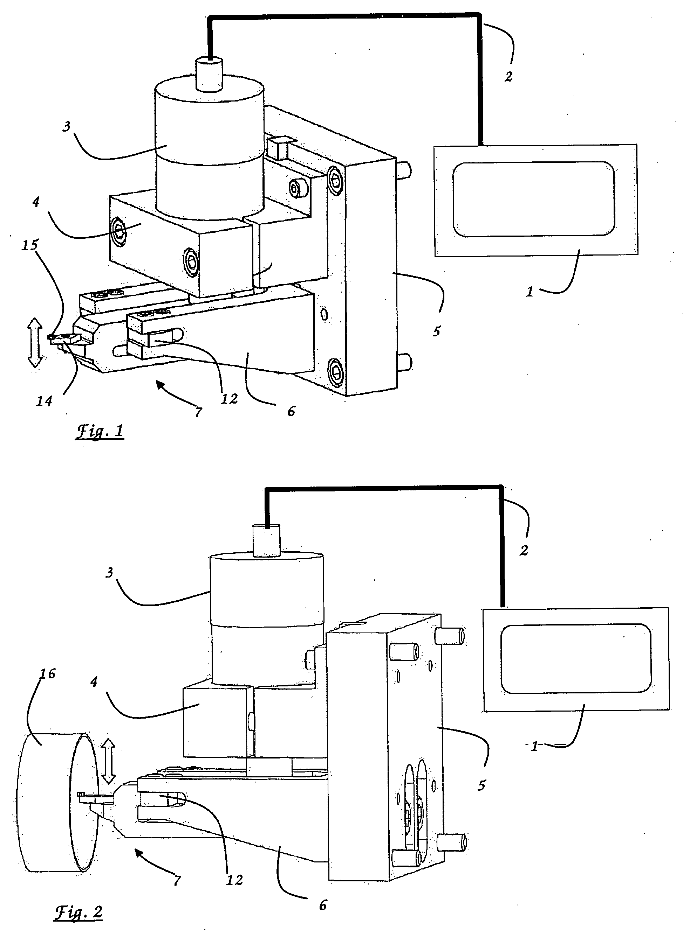

Fig. 1 und Fig. 2 zeigen in unterschiedlichen Ansichten ein Ultraschall-Schwingsystem mit einem Frequenzgenerator 1, der über ein Kabel 2, z. B. ein BNC-Kabel, mit einem Ultraschallkonverter 3 verbunden ist. Der Ultraschallkonverter 3 ist in einer Halterung 4 eingespannt, die wiederum an einer Adapterplatte 5 fixiert ist. Mit der Adapterplatte 5 kann das Ultraschall-Schwingsystem an eine Bearbeitungsmaschine befestigt werden.

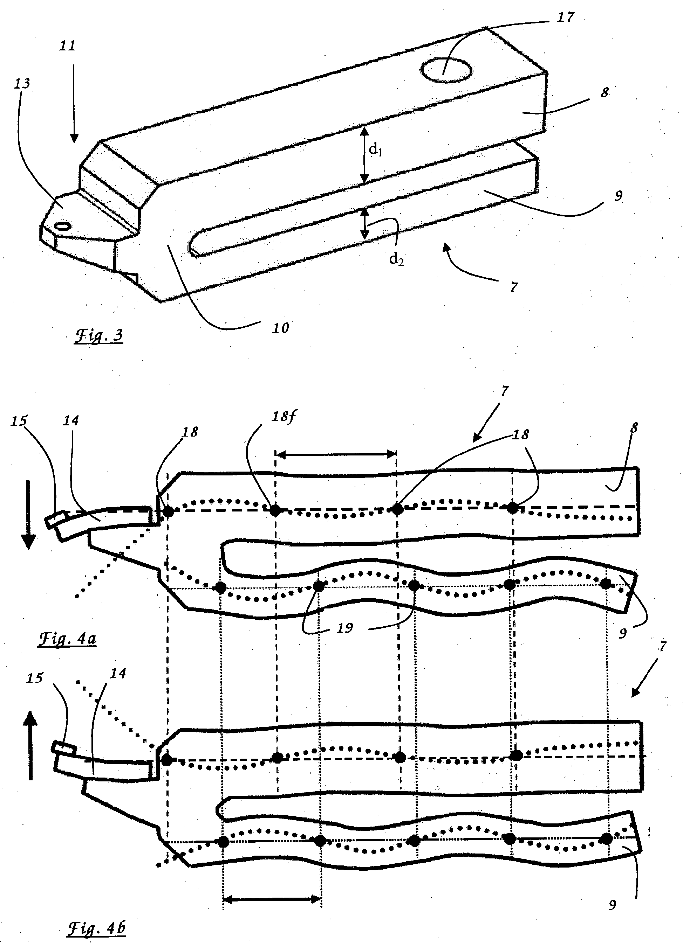

An der Adapterplatte 5 ist zudem eine Sonotrodenhalterung 6 angeordnet, in welcher eine Sonotrode 7 gelagert ist. Die in Fig. 3 detaillierter dargestellte Sonotrode 7 weist einen oberen ersten Sonotrodenarm 8 mit größerer Dicke d₁ und einen unteren zweiten Sonotrodenarm 9 mit geringerer Dicke d₂ auf (siehe Fig. 3). Die beiden Sonotrodenarme 8 und 9 verbinden sich in einer Verbindungsstelle 10 im Bereich des vorderen Sonotrodenendstücks 11.

In der Sonotrodenhalterung 6 ist die Sonotrode 7 an ihrem oberen Sonotrodenarm 8 in einem Schwingungsknotenpunkt 18f (Fig. 4a) seitlich durch Fixierungselemente 12 klemmend gehalten, die durch einen Bolzen, z.B. einen Gewindebolzen, oder quaderförmige Elemente oder dergleichen gebildet werden können. Dabei kann der Bolzen mittels einer hier nicht dargestellten Bohrung in die Sonotrode 7 hineingeführt sein. Das Sonotrodenendstück 11 (Fig. 3) weist eine zur Aufnahme eines Werkzeugs 14 (Fig. 1) dienende Werkzeugplattform 13 auf. Eine Werkzeugspitze 15 ist durch einen Diamanten gebildet.

Fig. 2 zeigt zudem ein zu bearbeitendes Werkstück 16.

Der mittels des Frequenzgenerators 1 erzeugte Ultraschall wird über das Kabel 2 und den Ultraschall-Konverter 3 in den ersten Sonotrodenarm 8 an der Einkoppelstelle 17 (Fig. 3) eingekoppelt. Die in Richtung des Doppelpfeiles in den Fig. 1 und 2 und damit transversal zur Längsrichtung der Sonotrode 7 schwingende Ultraschallwelle von z. B. 60 KHz breitet sich über den ersten Sonotrodenarm 8 und die Verbindungsstelle 10 bis in den zweiten Sonotrodenarm 9 aus. Aufgrund der unterschiedlichen Dicken der beiden Sonotrodenarme 8 und 9 bilden sich in den beiden Sonotrodenarmen 8 und 9 unterschiedliche Resonanzmoden, d. h. stehende Ultraschallwellen unterschiedlicher Wellenlänge, aus. An der Verbindungsstelle 10 überlagern sich die beiden Resonanzmoden des oberen Sonotrodenarms 8 und des unteren Sonotrodenarms 9 zu einer Misch-Resonanzmode, mit der dann das Sonotrodenendstück 11 ebenfalls in Richtung des Doppelpfeiles in den Fig. 1 und 2 schwingt.

In Fig. 4a und in Fig. 4b ist die Sonotrode 7 schematisch in zwei verschiedenen Schwingungszuständen dargestellt. Die Ultraschallschwingung wurde über die nur in Fig. 3 dargestellte Einkoppelstelle 17 eingekoppelt. Es ist erkennbar, dass der obere erste Sonotrodenarm 8 aufgrund seiner größeren Dicke im Vergleich zum unteren zweiten Sonotrodenarm 9 mit einer geringeren Amplitude aber mit größerer Wellenlänge schwingt. Aufgrund der unterschiedlichen Wellenlängen sind im Bereich des Sonotrodenendstücks 11 die beiden Ultraschallwellen gegeneinander um etwa 180° oder π phasenverschoben, wodurch sich im Sonotrodenendstück 11 eine gegenläufige Bewegung der Schwingungen der beiden Sonotrodenarme 8 und 9 ergibt.

Fig. 4a zeigt schematisch Schwingungsknotenpunkte 18 des ersten Sonotrodenarms 8. Schwingungsknotenpunkte 19, von denen aus Übersichtlichkeitsgründen lediglich zwei mit Bezugszeichen versehen sind, des zweiten Sonotrodenarms 9 sind entsprechend der kürzeren Wellenlänge demgegenüber verschoben. Die Fixierung der Sonotrode 7 im Sonotrodenhalter (Fig. 1) erfolgt allein im Bereich des Schwingungsknotenpunkts 18f. In Fig. 4b wurde auf die Bezugszeichen zu den Schwingungsknotenpunkten verzichtet.

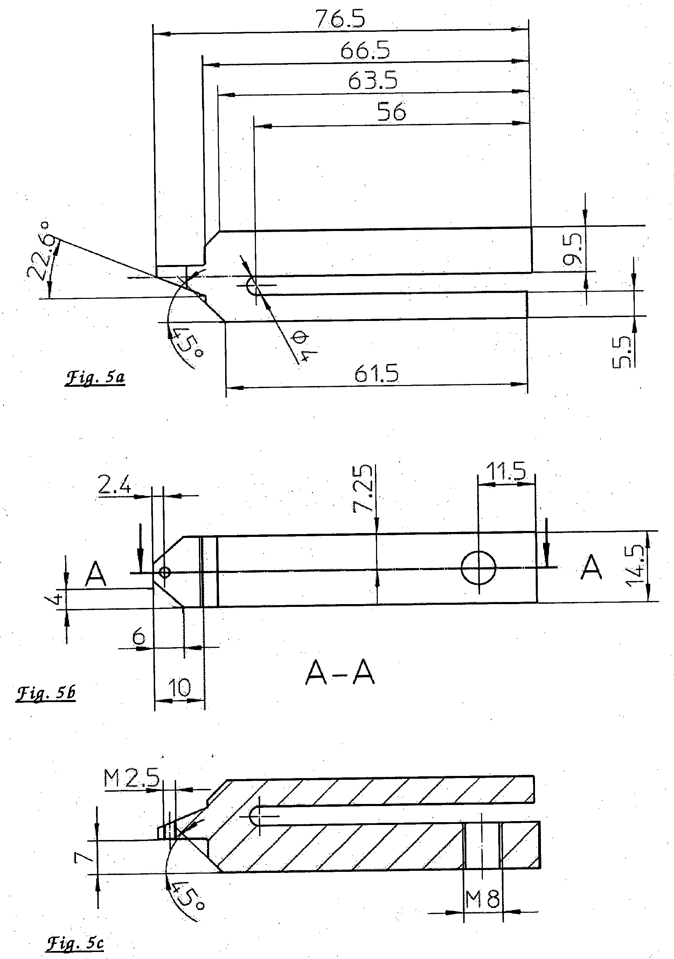

Die Figuren 5a bis 5c zeigen eine beispielhafte Ausführungsform der Sonotrode 7 mit Maßen, mit der die erfindungsgemäß gewünschten Effekte erzielt wurden. Das Material der Sonotrode ist ein Vergütungsstahl der Spezifikation C45E. Das Verhältnis der Ultraschallwellenlängen bei einer Frequenz von 60 KHz beträgt zwischen dem zweiten Sonotrodenarm 9 und dem ersten Sonotrodenarm 8 : 1/1,4.

### Bezugszeichenliste

- 1: Frequenzgenerator
- 2: Kabel
- 3: Ultraschall-Konverter
- 4: Halterung
- 5: Adapterplatte
- 6: Sonotrodenhalter
- 7: Sonotrode
- 8: erster Sonotrodenarm
- 9: zweiter Sonotrodenarm
- 10: Verbindungsstelle
- 11: Sonotrodenendstück
- 12: Fixierungselement
- 13: Werkzeugplattform
- 14: Werkzeug
- 15: Werkzeugspitze
- 16: Werkstück
- 17: Einkoppelstelle
- 18: Schwingungsknotenpunkt
- 18f: Schwingungsknotenpunkt im Bereich der Fixierung der Sonotrode
- 19: Schwingungsknotenpunkt

## Patentansprüche

1. Ultraschallgestütztes Verfahren, bei dem in mindestens zwei jeweils über eine Verbindungsstelle (10) miteinander verbundenen Sonotrodenarmen (8, 9) einer auskragend fixierten Sonotrode (7) jeweils eine zur Auskragungsrichtung transversale und in Resonanzmode schwingende Ultraschallwelle erzeugt wird, wobei in der mindestens einen Verbindungsstelle (10), welche unmittelbar an einem Sonotrodenendstück (11) angeordnet oder mit dem Sonotrodenendstück (11) identisch ist, einander überlagernde in den Sonotrodenarmen (8, 9) der Verbindungsstelle (10) schwingende Ultraschallwellen phasenversetzt zueinander schwingen, die Schwingungsebenen der überlagerten Ultraschallwellen parallel zueinander sind und der Ultraschall in eine einzige Einkoppelstelle (17) der Sonotrode (7) eingekoppelt wird, wobei mindestens zwei der Sonotrodenarme (8, 9) unterschiedliche Resonanzmoden erzeugen.

2. Ultraschallgestütztes Verfahren nach Anspruch 1, **dadurch gekennzeichnet, dass** der Ultraschall allein in einen der Sonotrodenarme (8, 9) eingekoppelt wird.

3. Verfahren nach Anspruch 1 oder 2, **dadurch gekennzeichnet, dass** die Resonanzmoden der überlagerten Ultraschallwellen derart gewählt werden, dass die Schwingungsbewegung eines Sonotrodenendstückes (11) zumindest in einem Teilbereich der Schwingungsbewegung
- von der Bogenform einer durch eine einzige transversale Ultraschallwelle erzeugten reinen Biegebewegung abweicht und
- einer in der Schwingungsebene gegebenen Senkrechten zur Auskragungsrichtung zumindest angenähert wird.

4. Zur Durchführung des Verfahrens nach einem der Ansprüche 1 bis 3
geeignetes Ultraschallsystem, umfassend
eine Ultraschallquelle (1) und
eine aus einer Sonotrodenhalterung (6) auskragende Sonotrode (7) nach einem der Ansprüche 6 bis 8.

5. Ultraschallsystem nach Anspruch 4, **dadurch gekennzeichnet, dass** am Sonotrodenendstück (11) ein Bearbeitungswerkzeug (14) angeordnet ist.

6. Sonotrode (7), umfassend mindestens zwei bei Ultraschallanregung unterschiedliche Resonanzmoden erzeugende und jeweils über eine Verbindungsstelle (10) miteinander verbundene Sonotrodenarme (8, 9), **dadurch gekennzeichnet, dass** die Sonotrode derart gestaltet ist, dass in der mindestens einen Verbindungsstelle (10) einander überlagernde, in den Sonotrodenarmen (8, 9) der Verbindungsstelle (10) schwingende Ultraschallwellen phasenversetzt zueinander schwingen, die Sonotrode (7) eine einzige Einkoppelstelle (17) für den Ultraschall aufweist und die Verbindungsstelle (10) unmittelbar an einem Sonotrodenendstück (11) angeordnet oder mit dem Sonotrodenendstück (11) identisch ist.

7. Sonotrode nach Anspruch 6, **dadurch gekennzeichnet, dass** die Einkoppelstelle (17) an einer der Sonotrodenarme (8, 9) angeordnet ist.

8. Sonotrode nach Anspruch 6 oder 7, **dadurch gekennzeichnet, dass** die Sonotrodenarme (8, 9) parallel zueinander verlaufen.

9. Sonotrode nach einem der Ansprüche 6 bis 8, **dadurch gekennzeichnet, dass** zwischen jeweils zwei Sonotrodenarmen (8, 9) genau eine Verbindungsstelle (10) gegeben ist.

10. Sonotrode nach einem der Ansprüche 6 bis 9, **dadurch gekennzeichnet, dass** mindestens einer der Sonotrodenarme (8, 9) ein frei schwingendes Ende aufweist.

## Claims

1. An ultrasound-assisted method, wherein, in at least two sonotrode arms (8, 9) of a sonotrode (7) fixed in a projecting manner, said arms being in each case connected to one another by means of a joint (10), respectively one ultrasonic wave which is transverse to the projection direction and oscillates in a resonant mode is generated, wherein, in the at least one joint (10) which is directly arranged at a sonotrode end piece (11) or identical to the sonotrode end piece (11), ultrasonic waves superposed on one another and oscillating in the sonotrode arms (8, 9) of the joint (10) oscillate with a phase offset in relation to one another, the oscillation planes of the superposed ultrasonic waves are parallel to one another and the ultrasound is coupled-in at a single coupling-in location (17) of the sonotrode (7), wherein at least two of the sonotrode arms (8, 9) generate different resonant modes.

2. The ultrasound-assisted method according to claim 1, **characterized in that** the ultrasound is only coupled into one of the sonotrode arms (8, 9)

3. The method according to claim 1 or 2, **characterized in that** the resonant modes of the superposed ultrasonic waves are selected in such a way that, at least during a portion of the oscillation movement, the oscillation movement of a sonotrode end piece (11)
- deviates from the arctuate form of a pure bending movement generated by a single transverse ultrasonic wave and
- is at least approximated to a perpendicular to the projection direction, given in the oscillation plane.

4. An ultrasonic system suitable for carrying out the method according to one of claims 1 to 3, comprising an ultrasonic source (1) and a sonotrode (7) projecting out of a sonotrode holder (6) according to one of the claims 6 to 8.

5. The ultrasonic system according to claim 4, **characterized in that** a machining tool (14) is arranged at the sonotrode end piece (11).

6. A sonotrode (7), comprising at least two sonotrode arms (8, 9), which generate different resonant modes in the case of ultrasonic excitation and are in each case connected to one another by means of a joint (10), **characterized in that** the sonotrode is configured in such a way that, in the at least one joint (10), ultrasonic waves superposed on one another and oscillating in the sonotrode arms (8, 9) of the joint (10) oscillate with a phase offset in relation to one another, the sonotrode (7) comprises a single coupling-in location (17) for the ultrasound and the joint (10) is arranged directly at a sonotrode end piece (11) or identical to the sonotrode end piece (11).

7. The sonotrode according to claim 6, **characterized in that** the coupling-in location (17) is arranged at one of the sonotrode arms (8, 9).

8. The sonotrode according to claim 6 or 7, **characterized in that** the sonotrode arms (8, 9) extend parallel to one another.

9. The sonotrode according to one of claims 6 to 8, **characterized in that** exactly one joint (10) is provided between respectively two sonotrode arms (8, 9).

10. The sonotrode according to one of claims 6 to 9, **characterized in that** at least one of the sonotrode arms (8, 9) has a freely oscillating end.

## Revendications

1. Procédé assisté par ultrasons, dans lequel une onde ultrasonique transversale par rapport à la direction de surplomb et oscillant dans le mode de résonance est respectivement produit dans au moins deux bras de sonotrode (8, 9), respectivement reliés entre eux via un point de onction (10), d'une sonotrode (7) fixée de façon surplombante, les ondes ultrasoniques se superposant les unes les autres et oscillant dans les bras de sonotrode (8, 9) du point de jonction (10) étant décalées en phase l'unes par rapport aux autres dans l'au moins un point de jonction (10) directement disposé au niveau d'une partie d'extrémité de sonotrode (11) ou étant identique à la partie d'extrémité de sonotrode (11), les plans d'oscillation des ondes ultrasoniques superposées étant parallèles les uns par rapport aux autres et l'ultrason étant couplé en un unique point de couplage (17) de la sonotrode (7), au moins deux des bras de sonotrode (8, 9) produisant différents modes de résonance.

2. Procédé assisté par ultrasons selon la revendication 1, **caractérisé en ce que** l'ultrason est couplé seulement dans un des bras de sonotrode (8, 9).

3. Procédé selon la revendication 1 ou 2, **caractérisé en ce que** les modes de résonance des ondes ultrasoniques se superposant sont sélectionnés de façon à ce que le mouvement d'oscillation d'une partie d'extrémité de sonotrode (11), au moins dans une zone partielle du mouvement d'oscillation:
- s'écarte de la forme d'arc d'un mouvement de flexion pur produit par une unique onde ultrasonique transversale ; et
- s'approche au moins d'une perpendiculaire à la direction de surplomb donnée dans le plan d'oscillation.

4. Système à ultrasons adapté à la mise en oeuvre du procédé selon l'une quelconque des revendications 1 à 3, comprenant :
une source d'ultrasons (1) ; et
une sonotrode (7) selon l'une quelconque des revendications 6 à 8 en surplomb par rapport à un support de sonotrode (6).

5. Système à ultrasons selon la revendication 4, **caractérisé en ce qu'**un outil d'usinage (14) est disposé au niveau de la partie d'extrémité de sonotrode (11).

6. Sonotrode (7) comprenant au moins deux bras de sonotrode (8, 9) produisant, en cas d'excitation d'ultrasons, différents modes de résonance et respectivement reliés entre eux via un point de jonction (10), **caractérisée en ce que** la sonotrode est agencée de telle sorte que des ondes ultrasoniques se superposant les unes les autres dans l'au moins un point de jonction (10) et oscillant dans les bras de sonotrode (8, 9) du point de jonction (10) sont décalées en phase les unes par rapport aux autres, la sonotrode comportant un unique point de couplage (17) pour l'ultrason et le point de jonction (10) étant disposé directement au niveau d'une partie d'extrémité de sonotrode (11) ou étant identique à la partie d'extrémité de sonotrode (11).

7. Sonotrode selon la revendication 6, **caractérisée en ce que** le point de couplage (17) est disposé au niveau d'un des bras de sonotrode (8, 9).

8. Sonotrode selon la revendication 6 ou 7, **caractérisée en ce que** les bras de sonotrode (8, 9) s'étendent parallèlement l'un par rapport à l'autre.

9. Sonotrode selon l'une quelconque des revendications 6 à 8, **caractérisée en ce que** précisément un point de jonction (10) est donné entre respectivement deux bras de sonotrode (8, 9).

10. Sonotrode selon l'une quelconque des revendications 6 à 9, **caractérisé en ce qu'**au moins un des bras de sonotrode (8, 9) comporte une extrémité oscillant librement.
